# EUROPEAN PATENT APPLICATION

(11) **EP 4 390 601 A1**
(43) Date of publication of application: **26.06.2024**
(21) Application number: 22216635.7
(22) Date of filing: 23.12.2022
(51) Int. Cl.: G05D 1/08, B63H 25/04

(54) **MANAGEMENT MODULE AND METHOD FOR DRIVING A BOAT**

(71) Applicant: Sea.AI GmbH, 4030 Linz (AT)
(72) Inventor: BIANCALE, Raphaël, 4030 LINZ (AT)
(74) Representative: Argyma

(57) **Abstract**

The invention relates to a management module (10) for automatically driving a boat (1) in a predetermined driving mode associated with a predetermined set of threshold values of acceleration and angular velocity of the boat (1). The management module is configured to receive 3D acceleration data from the accelerometer (20) and 3D angular velocity data from the gyroscope (30), compare each one of the received 3D acceleration data and each one of the 3D angular velocity data to the corresponding threshold value of the predetermined set of threshold values, and control the engine (2) power and/or the direction angle of the boat (1) when at least one of the received 3D acceleration data or 3D angular velocity data overtakes the corresponding threshold value of the predetermined set of threshold value.

## Description

### General technical field

The invention relates to the management of a boat and more particularly to a management module and method for automatically driving a boat in water such as e.g. an ocean, a sea or a lake. The present invention aims in particular at providing a solution which allows automatically driving a boat according to different driving modes.

### State of the art

It is well known in the art to equip a boat with an automatic pilot system or autopilot system able of controlling the engine of the boat to reach a predetermined destination. Such system comprises a management module implemented on an onboard computer. The skipper of the boat first enters a target destination, then the management module will control the acceleration of the boat in order to reach the target destination. More precisely, the management module calculates a direction angle of the boat and an acceleration value of the boat to reach the target destination then will control the power of the engine and the helm to generate the corresponding speed for the boat toward the direction angle. As the boat moves forward, the management module will periodically recalculate the acceleration and the direction angle to correct the trajectory of the boat until the boat reaches the target destination.

However, in the existing solutions, it is not possible yet to choose the manner the boat will be driven by the autopilot system. Moreover, periodic recalculations of the acceleration and of the direction angle need significant processing means, which might be costly. Furthermore, such processing might not be instantaneous and take a long time, for example a few seconds, which might introduce some error in the new acceleration and direction angle values as they might be based on obsolete calculations.

There is thus a need for a simple, reliable and efficient solution that allows to choose the way to drive a boat when driven by an autopilot system.

### General presentation of the invention

To this aim, the invention provides a management module for automatically driving a boat in a driving mode selected among a plurality of predetermined driving modes, each predetermined driving mode being characterized by a different predetermined set of threshold values of angular velocity of the boat, each set comprising a roll component threshold value, a pitch component threshold value and a yaw component threshold value, said boat comprising a gyroscope configured to measure and send periodically 3D angular velocity data sets to said management module, each 3D angular velocity data set comprising a roll component value of the boat, a pitch component value of the boat and a yaw component value of the boat, said management module being configured to:
- receive periodically a 3D angular velocity data set from the gyroscope,
- for a received set, compare each value of said received 3D angular velocity data set to the corresponding threshold value of the selected predetermined set of threshold values,
- control the engine power and/or the direction angle of the boat when at least one of the received 3D angular velocity data value of the received set overtakes the corresponding threshold value of the selected predetermined set of threshold values to decrease 3D angular velocity data values of the following 3D angular velocity data sets until each 3D angular velocity data value of a set be under their corresponding threshold of the selected predetermined set of threshold values.

The method according to the invention allows therefore to maintain the acceleration and the angular velocity of the boat within predetermined ranges in real time. The necessary calculations are instantaneous and light, needing thus only cheap and small processing means. The advantage of controlling the roll, pitch and yaw of a boat is to provide a more comfortable and saver ride for the crew and the passengers. For example, if the angular rates and/or accelerations are too large, the chance of someone falling over the board rises.

Preferably, each predetermined driving mode is also characterized by a different predetermined set of threshold values of acceleration of the boat, each set comprising a longitudinal component threshold value, a lateral component threshold value, a vertical component threshold value, said boat comprising an accelerometer configured to measure and send periodically 3D acceleration data sets to said management module, said 3D acceleration data comprising a longitudinal acceleration component value of the boat, a lateral acceleration component value of the boat and a vertical acceleration component value of the boat, said management module being configured to:
- receive periodically a 3D acceleration data set from the accelerometer,
- for a received set, compare each value of said received 3D acceleration data set to the corresponding threshold value of the selected predetermined set of threshold values of acceleration,
- control the engine power and/or the direction angle of the boat when at least one of the received 3D acceleration data value of the received set overtakes the corresponding threshold value of the selected predetermined set of threshold values of acceleration to decrease 3D acceleration data values of the following 3D acceleration data sets until each 3D acceleration value of a set be under their corresponding threshold of the selected predetermined set of threshold values of acceleration.

Using both the angular velocity and the acceleration allow to control the boat more accurately for maintaining the selected driving mode.

In an embodiment, the management module is configured to receive an information indicating the selection of a predetermined driving mode of the boat among a plurality of predetermined driving modes of the boat. The driving mode may thus be selected externally. For example, a user of the boat may select a driving mode (for example cruise for a smooth driving of the boat or sport for a sporty driving of the boat) and the management module will adapt the thresholds relatively to said mode (e.g., low thresholds for cruise mode and higher threshold for sport mode).

In an embodiment, the management module is configured to select a predetermined set of threshold values of angular velocity among a plurality of predetermined sets of threshold values of angular velocity, and, when acceleration is uses, a predetermined set of threshold values of acceleration among a plurality of predetermined sets of threshold values of acceleration, depending on the received driving mode information.

In an embodiment, the information is generated by a user of the boat, for example as a command sent through a driving interface or a button.

Preferably, the information is generated by a user of the boat using a Graphical User Interface (GUI) or by pressing a driving mode button, a joystick or a throttle.

Preferably, the management module is configured to select a default predetermined set of threshold values of angular velocity among a plurality of predetermined sets of threshold values of angular velocity, and if the acceleration is used, a default predetermined set of threshold values of acceleration among a plurality of predetermined sets of threshold values of acceleration, in particular at the start of the management module. Hence, the boat may still be driven in a default driving mode, even if a user does not specifically select a driving mode. This may be useful, for example, when the boat is driven using the autopilot mode.

Preferably, the management module is configured to:
- when a received longitudinal acceleration component value is greater than a corresponding longitudinal acceleration component threshold value, reduce the power of the engine,
- when a received lateral acceleration component value is greater than a corresponding lateral acceleration component threshold value, reduce the power of the engine and/or modifying the direction angle of the helm to reduce the lateral force applied to the boat,
- when a received vertical acceleration component value is greater than a corresponding vertical acceleration component threshold value, reduce the power of the engine,
- when a received roll component value is greater than a corresponding roll component threshold value, reduce the power of the engine and/or modify the direction angle of the helm to reduce the rolling force applied to the boat,
- when a received pitch component value is greater than a corresponding pitch component threshold value, reduce the power of the engine to reduce the pitching force applied to the boat,
- when a received yaw component value is greater than a corresponding yaw component threshold value, reduce the power of the engine and/or modify the direction angle of the helm to reduce the yawing force applied to the boat.

Preferably, the management module is configured to drive the boat on a trajectory between a starting point and a predetermined end point, e.g., using an autopilot module and mode.

The invention also relates to a boat comprising an engine, a helm, a communication network, a management module as presented here before and a gyroscope configured to send periodically 3D angular velocity data sets to the management module via the communication network, said 3D angular velocity data comprising a roll component value, a pitch component value and a yaw component value.

In an embodiment, the boat comprises an accelerometer configured to send periodically 3D acceleration data sets to the management module via the communication network, each 3D acceleration data set comprising a longitudinal acceleration component value, a lateral acceleration component value and a vertical acceleration component value.

For example, the boat is a sailing boat or a motor yacht or a speedboat or any suitable type of motorboat.

The invention also relates to a method of automatically driving a boat as presented here before in a driving mode selected among a plurality of predetermined driving modes, each predetermined driving mode being characterized by a different predetermined set of threshold values of angular velocity of the boat, each set comprising a roll component threshold value, a pitch component threshold value and a yaw component threshold value, said method comprising the steps of:
- receiving periodically a 3D angular velocity data set from the gyroscope,
- for a received set, comparing each value of said received 3D angular velocity data set to the corresponding threshold value of the selected predetermined set of threshold values,
- controlling the engine power and/or the direction angle of the boat when at least one of the received 3D angular velocity data value of the received set overtakes the corresponding threshold value of the selected predetermined set of threshold values to decrease 3D angular velocity data values of the following 3D angular velocity data sets until each 3D angular velocity data value of a set be under their corresponding threshold of the selected predetermined set of threshold values.

In an embodiment, wherein each predetermined driving mode is also characterized by a different predetermined set of threshold values of acceleration of the boat, wherein each set comprising a longitudinal component threshold value, a lateral component threshold value, a vertical component threshold value, wherein said boat comprising an accelerometer configured to measure and send periodically 3D acceleration data sets to said management module, wherein said 3D acceleration data comprising a longitudinal acceleration component value of the boat, a lateral acceleration component value of the boat and a vertical acceleration component value of the boat, the method comprising the steps of:
- receiving periodically a 3D acceleration data set from the accelerometer,
- for a received set, comparing each value of said received 3D acceleration data set to the corresponding threshold value of the selected predetermined set of threshold values of acceleration,
- controlling the engine power and/or the direction angle of the boat when at least one of the received 3D acceleration data value of the received set overtakes the corresponding threshold value of the selected predetermined set of threshold values of acceleration to decrease 3D acceleration data values of the following 3D acceleration data sets until each 3D acceleration value of a set be under their corresponding threshold of the selected predetermined set of threshold values of acceleration.

Preferably, the method comprises:
- when the longitudinal acceleration component value is greater than the longitudinal acceleration component threshold value, a step of reducing the power of the engine,
- when the lateral acceleration component value is greater than the lateral acceleration component threshold value, a step of reducing the power of the engine and/or modifying the direction angle of the helm to reduce the lateral force applied to the boat,
- when the vertical acceleration component value is greater than the vertical acceleration component threshold value, a step of reducing the power of the engine,
- when the roll component value is greater than the roll component threshold value, a step of reducing the power of the engine and/or modifying the direction angle of the helm to reduce the rolling force applied to the boat,
- when the pitch component value is greater than the pitch component threshold value, a step of reducing the power of the engine to reduce the pitching force applied to the boat,
- when the yaw component value is greater than the yaw component threshold value, a step of reducing the power of the engine and/or modifying the direction angle of the helm to reduce the yawing force applied to the boat.

In an embodiment, the method comprises a step of receiving an information indicating the selection of a predetermined driving mode of the boat among a plurality of predetermined driving modes of the boat.

In an embodiment, the method comprises a step of selecting a predetermined set of threshold values of angular velocity among a plurality of predetermined sets of threshold values of angular velocity, and, when acceleration is uses, a predetermined set of threshold values of acceleration among a plurality of predetermined sets of threshold values of acceleration, depending on the received driving mode information.

In an embodiment, the information is sent upon manually selecting a driving mode of the boat.

Preferably, the manual selection is operated though a graphical user interface or by pressing a button.

In an embodiment, the method comprises a step of selecting a default predetermined set of threshold values of angular velocity among a plurality of predetermined sets of threshold values of angular velocity, and if the acceleration is used, a default predetermined set of threshold values of acceleration among a plurality of predetermined sets of threshold values of acceleration, in particular at the start of the management module.

In an embodiment, the method comprises the step of automatically calculating a trajectory up to a predetermined target destination point.

### FIGURES

Figure 1 schematically illustrates an exemplary embodiment of a boat according to the invention.
Figure 2 illustrates an exemplary embodiment of the method according to the invention.

### DETAILED DESCRIPTION

The system according to the invention allows to drive a boat based on different driving modes that may be preselected, either manually by a user or automatically by the management module according to the invention, for example based on weather and/or water conditions.

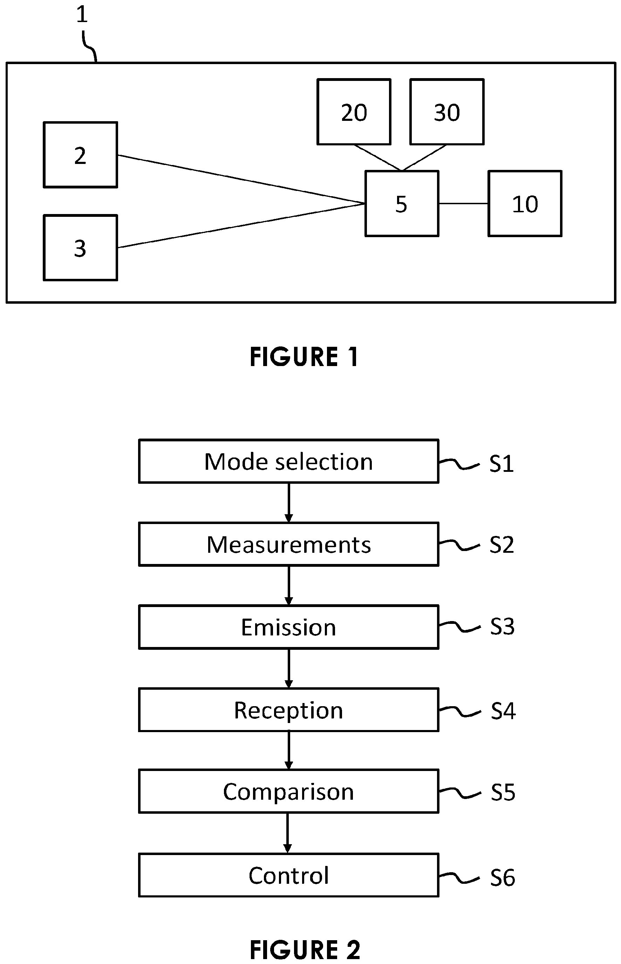

Figure 1 illustrates an embodiment of a boat according to the invention. The boat 1 may be any type of boat including an engine, such as e.g., a motor yacht, a speedboat, a sailing boat or any suitable type of motorboat.

The boat 1 comprises an engine 2, a helm 3, a communication network 5, a management module 10, an accelerometer 20 and a gyroscope 30.

The communication network 5 allows linking the accelerometer 20 and the gyroscope 30 to the management module 10 in order for the accelerometer 20 and the gyroscope 30 to send their measurement data to said management module 10. In other words, the management module 10, the accelerometer 20 and the gyroscope 30 are nodes of the communication network 5.

The communication network 5 may be a wire-type network, for example using CAN (Control Area Network) buses or Ethernet or any suitable wire-type network. The communication network 5 may also be a wireless-type communication network, such as a Wifi or a Bluetooth^{®} network or any suitable wireless-type network. The communication network 5 may also be a combination of wire-type and wireless-networks.

The accelerometer 20 is configured to measure in real time the acceleration of the boat 1 along three-dimension (3D) axes, namely a longitudinal axis X, a lateral axis Y and a vertical axis Z. The longitudinal axis X is parallel to the terrestrial horizontal and extends along the direction of the boat 1. The lateral axis Y is parallel to the terrestrial horizontal and extends perpendicularly to the longitudinal axis X. The vertical axis Z is parallel to the terrestrial vertical and extends perpendicularly to both the longitudinal axis X and the lateral axis Y. The measurement values are measured continuously, i.e. periodically at close sample instants, for example between every few milliseconds and a second, by the accelerometer 20 and are called 3D acceleration data, which are grouped, for each instant of measurement, in a 3D acceleration data set.

The accelerometer 20 is configured to send each measured 3D acceleration data to the management module 10 via the communication network 5. In other words, the 3D acceleration data comprise a longitudinal acceleration component value, a lateral acceleration component value and a vertical acceleration component value. The 3D acceleration data may be measured and sent at regular intervals, for example every 10 to 20 ms.

The gyroscope 30 is configured to measure in real time the angular velocity of the boat 1 relatively to the longitudinal axis X, the lateral axis Y and a vertical axis Z, called the roll ω_{X}, the pitch ω_{Y} and the yaw ω_{Z}. The measurement values are measured continuously, i.e. periodically at close sample instants, for example between every few milliseconds and a second, by the gyroscope 30. The measurement values are called 3D angular velocity data are grouped, for each instant of measurement, in a 3D angular velocity data set.

The gyroscope 30 is configured to send each measured 3D angular velocity data set to the management module 10 via the communication network 5. In other words, the 3D angular velocity data comprise a roll component value, a pitch component value and a yaw component value. The 3D angular velocity data may be measured and sent at regular intervals, for example every 10 to 20 ms.

The boat 1 may be driven according to a plurality of driving modes. For example, a comfort mode may be defined for automatically driving in a smooth manner, a sport mode may be defined for automatically driving the boat 1 in a sporty manner.

Each mode is defined by a predetermined set of six threshold values: three threshold values for the acceleration of the boat 1 along respectively the longitudinal axis X, the lateral axis Y and a vertical axis Z and three threshold values for the gyroscopic movements of the boat 1 along the roll ω_{X}, the pitch ω_{Y} and the yaw ω_{Z} angular velocities of the boat 1.

For acceleration, threshold values may be set for example to 0,25g in the x-direction and the y-direction and 0,5 g in the z-direction.

For the gyroscopic parameters, threshold values may be set for example to 5°/s for the roll ω_{X}, the pitch ω_{Y} and the yaw ω_{Z} angular velocities.

The management module 10 is configured to control the power of the engine 2 and the direction angle of the helm 3 by sending control commands to respectively said engine 2 and said helm 3 via the communication network 5.

The management module 10 is configured to receive 3D acceleration data set from the accelerometer 20 and 3D angular velocity data set from the gyroscope 30 via the communication network 5.

The management module 10 is configured to compare each value of the received 3D acceleration data set and each value of the 3D angular velocity data set to a corresponding threshold value of a predetermined set of threshold values associated with a given driving mode.

The management module 10 is configured to control the power of the engine 2 and the helm 3 for setting the direction angle of the boat 1 when at least one value of the received 3D acceleration data set or 3D angular velocity data set overtakes the corresponding threshold value of the selected predetermined set of threshold values of the given driving mode.

The management module 10 is configured to select a predetermined set of threshold values being among a plurality of sets of threshold values, each set of threshold values of the plurality of sets of threshold values being associated with a driving mode of the boat 1.

The management module 10 is configured to receive an information indicating the selection of a predetermined driving mode of the boat 1 among a plurality of predetermined driving modes of the boat 1.

The management module 10 is configured to select a predetermined set of threshold values of angular velocity among a plurality of predetermined sets of threshold values of angular velocity, and, when acceleration is uses, a predetermined set of threshold values of acceleration among a plurality of predetermined sets of threshold values of acceleration, depending on the received driving mode information.

The management module 10 being configured to select a default predetermined set of threshold values of angular velocity among a plurality of predetermined sets of threshold values of angular velocity, and if the acceleration is used, a default predetermined set of threshold values of acceleration among a plurality of predetermined sets of threshold values of acceleration, in particular at the start of the management module 10.

The management module 10 is configured to, if a received longitudinal acceleration component value is greater than the longitudinal acceleration component threshold value, reduce the engine 2 power. The management module 10 is configured to, if a received lateral acceleration component value is greater than the lateral acceleration component threshold value, reduce the engine 2 power and/or modify the direction angle of the helm 3 to reduce the centrifugal force. The management module 10 is configured to, if a received vertical acceleration component value is greater than the vertical acceleration component threshold value, reduce the engine 2 power.

The management module 10 is configured to, if a received roll component value is greater than the roll component threshold value, reduce the engine 2 power and/or modify the direction angle to reduce the centrifugal force. The management module 10 is configured to, if a received pitch component value is greater than the pitch component threshold value, reduce the engine 2 power. The management module 10 is configured to, if a received yaw component value is greater than the yaw component threshold value, reduce the engine 2 power and/or modify the direction angle to reduce the centrifugal force.

The management module 10 is configured to drive the boat 1 on a trajectory between a starting point and a predetermined end point.

The management module 10 comprises a processor for implementing a set of instructions allowing to operate the above-mentioned functions.

An exemplary embodiment will now be described in reference to Figure 2, in which two different predefined driving modes are used: a comfort mode and a sport mode. Of course, any other suitable mode could be defined and used within the framework of the present invention.

The six threshold values of the comfort mode are lower than the six threshold values of the sport mode. In other words, lower amplitudes of acceleration and angular velocities will be allowed without any action in the comfort mode than in the sport mode to smoothen the driving of the boat 1. Consequently, actions on the driving of the boat will be taken more quickly in the comfort mode than in the sport mode to smoothen the driving of the boat 1.

For driving the boat 1, a driving mode is selected at first in a step S1.

For example, the skipper of the boat 1 selects manually to use the driving mode, for example the sport mode. The selection may be realized using a graphical user interface, such as e.g. a tablet or a smartphone, or by pressing a button or by using a mouse or a tracker or any suitable mean for selecting the driving mode. Alternatively, the management module 10 can select a default mode, for example the sport mode, which may have been defined as the default mode by the skipper previously.

Once the driving mode has been selected, the management module 10 selects the corresponding set of threshold values, of the sport mode in this example, then sets up the six threshold values as reference values for the current driving.

The accelerometer 20 and the gyroscope 30 continuously measures respectively the acceleration along the three dimensions and the angular velocity around the three dimensions in a step S2 and send periodically a set of 3D acceleration data and a set of 3D angular velocity data to the management module 10 in a step S3, which are received by the management module 10 in a step S4. Each set of 3D acceleration data comprises a measured longitudinal acceleration component value, a measured lateral acceleration component value and a measured vertical acceleration component value. Similarly, each set of 3D angular velocity data comprises a measured roll component value, a measured pitch component value and a measured yaw component value.

Upon reception (step S4), the management module 10 compares in a step S5 each one of said received 3D acceleration data value and each one of the received 3D angular velocity data value to the corresponding threshold value of the selected set of threshold values for the current driving mode. More precisely, the management module 10 compares the received longitudinal acceleration component value to the longitudinal acceleration component threshold value of the selected driving mode, the received lateral acceleration component value to the received lateral acceleration component threshold value of the selected driving mode, the received vertical acceleration component value to the vertical acceleration component threshold value of the selected driving mode, the received roll component value to the roll component threshold value of the selected driving mode, the received pitch component value to the pitch component threshold value of the selected driving mode and the received yaw component value to the yaw component threshold value of the selected driving mode.

If at least one of the received 3D acceleration data values or 3D angular velocity data values overtakes the corresponding threshold value of the selected set of threshold values, actions shall be taken by the management module 10 to reduce said at least one of the received 3D acceleration data values or 3D angular velocity data values. More precisely, the management module 10 will control the power of the engine 2 and/or the direction angle of the helm 3 of the boat 1 in a step S6.

For example, if the received longitudinal acceleration component value is greater than the longitudinal acceleration component threshold value, the management module 10 reduces the engine 2 power to decrease the value of the longitudinal component (i.e. the speed of the boat 1). If the lateral acceleration component value is greater than the lateral acceleration component threshold value, the management module 10 may either reduce the engine 2 power to decrease the value of the lateral acceleration component or modifying the direction angle of the boat 1 to reduce the lateral force applied to the boat 1 or both reduce the engine 2 power or modify the direction angle of the boat 1. If the vertical acceleration component value is greater than the vertical acceleration component threshold value, the management module 10 reduces the engine 2 power to decrease the value of the vertical acceleration component. If the roll component value is greater than the roll component threshold value, the management module 10 could either reduce the engine 2 power to reduce the roll of the boat 1 or modifies the direction angle of the boat 1 in order to reduce the centrifugal force of turn of the boat 1 or both reduce the engine 2 power and modifies the direction angle of the boat 1. Indeed, the roll of the boat 1 will be important for example when waves come perpendicularly to the direction of the boat 1 and, in this case, modifying the direction angle of the boat 1 allows in most cases reducing the roll of the boat 1, for example by placing the direction of the boat parallel to the direction of the waves. If the pitch component value is greater than the pitch component threshold value, the management module 10 reduces the engine 2 power to decrease the value of the pitch. If the yaw component value is greater than the yaw component threshold value, the management module 10 may either reduce the engine 2 power to decrease the yaw of the boat 1 or modify the direction angle of the boat 1 to reduce the force applied to the boat 1 around the vertical axis.

If none of the received 3D acceleration data values or 3D angular velocity data values is above its corresponding threshold for the current driving mode, the management module 10 does not take any action on the engine 2 power, nor the helm 3 of the boat 1.

At any time of the trip, the skipper may switch to another driving mode. For example, if the moves of the boat 1 are too important in sport mode, the skipper may select the comfort mode. In this case, the management module 10 will select the set of threshold values associated to the comfort mode and continue implementing the steps S2 to S6. By doing so, as the threshold values of the comfort mode are less than the threshold values of the sport mode, the management module 10 will control the engine 2 power and/or the helm 3 of the boat 1 more quickly as the values of the six parameters increase to reduce movements of the boat 1 in and around the longitudinal axis X, the lateral axis Y and the vertical axis Z.

## Claims

1. A management module (10) for automatically driving a boat (1) in a driving mode selected among a plurality of predetermined driving modes, each predetermined driving mode being **characterized by** a different predetermined set of threshold values of angular velocity of the boat (1), each set comprising a roll component threshold value, a pitch component threshold value and a yaw component threshold value, said boat (1) comprising a gyroscope (30) configured to measure and send periodically 3D angular velocity data sets to said management module (10), each 3D angular velocity data set comprising a roll component value of the boat (1), a pitch component value of the boat (1) and a yaw component value of the boat (1), said management module (10) being configured to:
- receive periodically a 3D angular velocity data set from the gyroscope (30),
- for a received set, compare each value of said received 3D angular velocity data set to the corresponding threshold value of the selected predetermined set of threshold values,
- control the engine (2) power and/or the direction angle of the boat (1) when at least one of the received 3D angular velocity data value of the received set overtakes the corresponding threshold value of the selected predetermined set of threshold values to decrease 3D angular velocity data values of the following 3D angular velocity data sets until each 3D angular velocity data value of a set be under their corresponding threshold of the selected predetermined set of threshold values.

2. The management module (10) according to claim 1, wherein each predetermined driving mode is **characterized by** a different predetermined set of threshold values of acceleration of the boat (1), each set comprising a longitudinal component threshold value, a lateral component threshold value, a vertical component threshold value, said boat (1) comprising an accelerometer (20) configured to measure and send periodically 3D acceleration data sets to said management module (10), said 3D acceleration data comprising a longitudinal acceleration component value of the boat (1), a lateral acceleration component value of the boat (1) and a vertical acceleration component value of the boat (1), said management module (10) being configured to:
- receive periodically a 3D acceleration data set from the accelerometer (20),
- for a received set, compare each value of said received 3D acceleration data set to the corresponding threshold value of the selected predetermined set of threshold values of acceleration,
- control the engine (2) power and/or the direction angle of the boat (1) when at least one of the received 3D acceleration data value of the received set overtakes the corresponding threshold value of the selected predetermined set of threshold values of acceleration to decrease 3D acceleration data values of the following 3D acceleration data sets until each 3D acceleration value of a set be under their corresponding threshold of the selected predetermined set of threshold values of acceleration.

3. The management module (10) according to claim 1, said management module (10) being configured to receive an information indicating the selection of a predetermined driving mode of the boat (1) among a plurality of predetermined driving modes of the boat (1).

4. The management module (10) according to the preceding claim, said management module (10) being configured to select a predetermined set of threshold values of angular velocity among a plurality of predetermined sets of threshold values of angular velocity, and, when acceleration is uses, a predetermined set of threshold values of acceleration among a plurality of predetermined sets of threshold values of acceleration, depending on the received driving mode information.

5. The management module (10) according to the any of claims 3 or 4, wherein the information is generated by a user of the boat (1).

6. The management module (10) according to the preceding claim, wherein the information is generated by a user of the boat (1) using a Graphical User Interface (GUI) or by pressing a driving mode button.

7. The management module (10) according to claim 1, said management module (10) being configured to select a default predetermined set of threshold values of angular velocity among a plurality of predetermined sets of threshold values of angular velocity, and if the acceleration is used, a default predetermined set of threshold values of acceleration among a plurality of predetermined sets of threshold values of acceleration, in particular at the start of the management module (10).

8. The management module (10) according to any of the preceding claims, said management module (10) being configured to:
- when a received longitudinal acceleration component value is greater than a corresponding longitudinal acceleration component threshold value, reduce the power of the engine (2),
- when a received lateral acceleration component value is greater than a corresponding lateral acceleration component threshold value, reduce the power of the engine (2) and/or modifying the direction angle of the helm (3) to reduce the lateral force applied to the boat (1),
- when a received vertical acceleration component value is greater than a corresponding vertical acceleration component threshold value, reduce the power of the engine (2),
- when a received roll component value is greater than a corresponding roll component threshold value, reduce the power of the engine (2) and/or modify the direction angle of the helm (3) to reduce the rolling force applied to the boat (1),
- when a received pitch component value is greater than a corresponding pitch component threshold value, reduce the power of the engine (2) to reduce the pitching force applied to the boat (1),
- when a received yaw component value is greater than a corresponding yaw component threshold value, reduce the power of the engine (2) and/or modify the direction angle of the helm (3) to reduce the yawing force applied to the boat (1).

9. A boat (1) comprising an engine (2), a helm (3), a communication network (5), a management module (10) according to any of the preceding claims and a gyroscope (30) configured to send periodically 3D angular velocity data sets to the management module (10) via the communication network (5), said 3D angular velocity data comprising a roll component value, a pitch component value and a yaw component value.

10. A method of automatically driving a boat (1) according to the preceding claim in a driving mode selected among a plurality of predetermined driving modes, each predetermined driving mode being **characterized by** a different predetermined set of threshold values of angular velocity of the boat (1), each set comprising a roll component threshold value, a pitch component threshold value and a yaw component threshold value, said method comprising the steps of:
- receiving (S4) periodically a 3D angular velocity data set from the gyroscope (30),
- for a received set, comparing (S5) each value of said received 3D angular velocity data set to the corresponding threshold value of the selected predetermined set of threshold values,
- controlling (S6) the engine (2) power and/or the direction angle of the boat (1) when at least one of the received 3D angular velocity data value of the received set overtakes the corresponding threshold value of the selected predetermined set of threshold values to decrease 3D angular velocity data values of the following 3D angular velocity data sets until each 3D angular velocity data value of a set be under their corresponding threshold of the selected predetermined set of threshold values.

11. The method according to the preceding claim, said method comprising:
- when the longitudinal acceleration component value is greater than the longitudinal acceleration component threshold value, a step of reducing the power of the engine (2),
- when the lateral acceleration component value is greater than the lateral acceleration component threshold value, a step of reducing the power of the engine (2) and/or modifying the direction angle of the helm (3) to reduce the lateral force applied to the boat (1),
- when the vertical acceleration component value is greater than the vertical acceleration component threshold value, a step of reducing the power of the engine (2),
- when the roll component value is greater than the roll component threshold value, a step of reducing the power of the engine (2) and/or modifying the direction angle of the helm (3) to reduce the rolling force applied to the boat (1),
- when the pitch component value is greater than the pitch component threshold value, a step of reducing the power of the engine (2) to reduce the pitching force applied to the boat (1),
- when the yaw component value is greater than the yaw component threshold value, a step of reducing the power of the engine (2) and/or modifying the direction angle of the helm (3) to reduce the yawing force applied to the boat (1).

12. The method according to any of claims 10 or 11, said method comprising a step of receiving an information indicating the selection of a predetermined driving mode of the boat (1) among a plurality of predetermined driving modes of the boat (1).

13. The method according to the preceding claim, said method comprising a step of selecting a predetermined set of threshold values of angular velocity among a plurality of predetermined sets of threshold values of angular velocity, and, when acceleration is uses, a predetermined set of threshold values of acceleration among a plurality of predetermined sets of threshold values of acceleration, depending on the received driving mode information.

14. The method according to the preceding claim, wherein the information is sent upon manually selecting a driving mode of the boat (1) by a user.

15. The method according to the preceding claim, wherein the manual selection is operated though a graphical user interface or by pressing a button.
